# EUROPÄISCHE PATENTSCHRIFT

(11) **EP 1 132 192 B1**
(45) Veröffentlichungstag und Bekanntmachung des Hinweises auf die Patenterteilung: **27.07.2005**
(21) Anmeldenummer: 01890062.1
(22) Anmeldetag: 06.03.2001
(51) Int. Cl.: B29C 47/82

(54) **Verfahren zum Beheizen und Kühlen von Extruderzylindern sowie Vorrichtung hierfür**
Method and apparatus for heating and cooling extruder barrels
Méthode et dispositif pour échauffer et refroidir de cylindres d'extrusion

(30) Priorität: 07.03.2000 AT 3772000
(43) Veröffentlichungstag der Anmeldung: 12.09.2001
(73) Patentinhaber: Theysohn Extrusionstechnik Gesellschaft m.b.H., 2100 Korneuburg (AT)
(72) Erfinder: Zahradnik, Rudolf, 2130 Mistelbach (AT)
(74) Vertreter: Müllner, Erwin, Dr.

(56) Entgegenhaltungen:
- EP-A- 0 785 061
- DE-A- 2 756 752
- FR-A- 1 467 944
- US-A- 4 088 430
- US-A- 4 183 448
- US-A- 4 612 355

## Beschreibung

Die vorliegende Erfindung betrifft ein Verfahren zum Beheizen und Kühlen von Extruderzylindern, insbesondere Zylindern von Doppelschneckenextrudern, wobei der Zylinder in mehrere Heizzonen bzw. Heiz-/Kühlzonen unterteilt ist, die Kühlung durch ein Wärmeträgeröl erfolgt, das durch mindestens eine Kühlwendel gepumpt wird und während der Kühlung des Zylinders durch ein Kühlmedium gekühlt wird, und die Beheizung mittels außerhalb der Kühlwendel angeordneter elektrischer Widerstandsheizelemente erfolgt, wobei auch während der reinen Heizphasen ein geringer Öldurchfluss zur Vergleichmäßigung der Temperierung erhalten bleibt. Sie betrifft weiters eine Vorrichtung zur Durchführung des Verfahrens gemäß dem Oberbegriff von Anspruch 8. Solch eine Vorrichtung ist aus der US4183448 bekannt.

Zylinder von Doppelschneckenextrudern müssen beheizt und zumindest zeitweise und zumindest in Teilabschnitten der Länge gekühlt werden. Zu diesem Zwecke wird der Zylinder in mehrere Längsabschnitte (Heizzonen bzw. Heiz-/Kühlzonen) unterteilt, um die einzelnen Abschnitte mit jeweils eigenen Temperaturreglern optimal auf die verfahrenstechnischen Erfordernisse auszuregeln. Grundsätzlich muss vor Produktionsbeginn der gesamte Zylinder erwärmt werden. In allen Heizzonen und Heiz-/Kühlzonen wird deshalb ausschließlich beheizt. Je nach Größe des Extruders kann dieser Vorgang mehrere Stunden dauern. Während des Betriebes müssen meist nur die ersten Heizzonen beheizt werden, während die Ausstoßzone kaum beheizt, oft sogar überwiegend gekühlt werden muss. Ein allgemeines Problem der Temperierung, unabhängig ob in den Heiz- oder Kühlphasen, ist die wärmeleittechnisch ungünstige geometrische Form der Zylinderquerschnitte. (Handbuch der Kunststoff-Extrusionstechnik, Bd. I Grundlagen, Seite 522, Zylindertemperierung, Karl Hanser Verlag 1989). Nach dem Stand der Technik weisen die Zylinder einen kreisförmigen Querschnitt auf, während die zentrisch angeordneten Brillenbohrungen zur Aufnahme der Schnecken die Form einer liegenden 8 haben. Dadurch ergeben sich sehr unterschiedliche Abstände zwischen den Flächen, an denen nach oder von außen Wärme übertragen wird, zu den Flächen, an denen diese Wärmeübertragung verfahrenstechnisch erforderlich ist, nämlich den Mantelflächen der Brillenbohrung.

Beheizt wird nach dem Stand der Technik mit elektrischen Widerstandsheizkörpern, die den Umfang des Zylinders fest umschließen. Gekühlt wird entweder mit Luft (von angebauten Gebläsen) oder mit einem Wärmeträgeröl, das durch Kühlschlangen gepumpt wird, die in den Zylinderaußenmantel oder in einem auf dem Zylinder angebrachten Kühlelement eingebettet sind. Es sind auch Ausführungen bekannt, bei der die Widerstandsheizung in gut wärmeleitfähige Körper eingegossen oder eingesetzt ist. In diesen Körpern können auch Kühlrohre oder Luftkühlrippen integriert sein. Die Luftkühlung ist einfach und sauber in der Handhabung, hat aber ihre Grenzen in der Kühlleistung. Insbesondere bei Hochleistungsmaschinen mit hohem Kühlbedarf und/oder hohen Umgebungstemperaturen stößt die Luftkühlung an ihre Grenzen und auf wenig Akzeptanz. Zusätzliche Kühlrippen im Zylinder oder an aufgebauten Elementen verbessern zwar das Ergebnis, haben aber auch ihre Grenzen. Hohe Umgebungstemperaturen würden weiter erhöht. Der Einsatz von zusätzlichen Luftkühlgeräten wäre sehr kostenintensiv. Bei diesen Anwendungsfällen werden die betreffenden Zonen nach dem Stand der Technik mit Wärmeträgeröl gekühlt, wobei das Öl mittels Wärmetauscher mit Wasser gekühlt wird. Zu diesem Zweck ist mindestens ein Kühlrohr je Heizzone in eine wendelförmige Nut in den Zylinderaußenmantel so eingewalzt, dass eine im wesentlichen glatte Außenfläche entsteht. Über diesem Kühlrohr ist ein normales elektrisches Widerstandsheizband montiert. Besteht Kühlbedarf, wird das Kühlrohr von kaltem Wärmeträgeröl durchflossen, besteht Heizbedarf, wird durch das Kühlrohr hindurch elektrisch beheizt.

Die Temperaturregler sind als Dreipunktregler ausgeführt. D. h. es liegen 3 Temperierzustände vor: Heizung ein, Kühlung aus; Heizung und Kühlung aus; Kühlung ein, Heizung aus.

Um während der Heizphasen eine ausreichende Wärmeübertragung zu erzielen, ist es erforderlich, dass die Kühlschlange ständig mit Wärmeträgeröl gefüllt bleibt. Da die elektrischen Widerstandsheizkörper in den Heizphasen aber höhere Oberflächentemperaturen erreichen als Wärmeträgeröle dauerhaft aushalten, ist es unvermeidlich, dass das Temperieröl rasch thermisch geschädigt wird. Es entstehen Vercrackungsprodukte (Ölkohle), die sich in den Rohrleitungen und Ventilen absetzen. Auf Dauer kann das bis zum Verstopfen der Leitungen führen. Ein Entleeren der Kühlschlange würde den thermischen Abbau nicht verringern, sondern erhöhen. Durch die schlechtere Wärmeleitung würden die Heizbandtemperaturen noch höher steigen und der an der Rohrinnenwand haftende Ölfilm würde noch rascher vercracken. Eine bekannte Lösung dieses Problems sieht vor, dass während der Heizphasen ein minimaler öldurchfluss über eine Bypass-Leitung erhalten bleibt (Prospekt Fa. Theysohn Extrusionstechnik, 1993, Seite 7). Dieser minimale Öldurchfluss beeinträchtigt die Heizung nicht nennenswert, erhöht aber die Gebrauchsdauer des Wärmeträgeröles beträchtlich. Der Nachteil ist, dass dieses System recht störungsanfällig sein kann. Der geringe Öldurchfluss wird erzielt durch reduzierte Querschnitte in der Bypass-Leitung. Diese kleinen Querschnitte können selbst bei geringem Ölkohleanteil im Temperieröl leicht verstopfen. Das Vorschalten von entsprechend feinen Filtern verlagert das Problem lediglich.

Es ist Aufgabe der vorliegenden Erfindung, diese Nachteile zu vermeiden und ein Verfahren bzw. eine Vorrichtung zu schaffen, mit dem bzw. mit der eine präzisere Temperaturregelung möglich ist.

Diese Aufgabe wird durch ein Verfahren der eingangs genannten Art erfindungsgemäß dadurch gelöst, dass die Ölmenge in Abhängigkeit vom Kühlbedarf, der von einem stetig arbeitenden Temperaturregler ermittelt wird, kontinuierlich von einer minimalen Durchströmung bis zur maximalen Durchströmung geregelt wird. Alternativ dazu ist es ebenso möglich, dass die Menge des Kühlmediums für das Wärmeträgeröl in Abhängigkeit von einem stetig arbeitenden Temperaturregler kontinuierlich geregelt wird.

Das erste erfindungsgemäße Verfahren, das geeignet ist, die oben genannten Nachteile zu beseitigen, sieht vor, dass der Temperaturregler zumindest für das Kühlen als stetiger Regler arbeitet und die Pumpe abhängig vom Kühlbedarf in ihrer Förderleistung geregelt wird. Der minimale Öldurchfluss während der Heizphasen wird nicht durch eine Bypass-Leitung mit reduziertem Querschnitt, sondern durch Absenken der Förderleistung auf eine minimale Durchströmung sichergestellt. Damit ist die Gefahr, dass die Bypass-Leitung verstopft, gebannt. Infolge der kontinuierlichen Regelung wird außerdem die Präzision erhöht gegenüber der bekannten Dreipunkt-Regelung.

Das zweite erfindungsgemäße Verfahren unterscheidet sich vom ersten dahingehend, dass die Menge des Kühlmediums für das Wärmeträgeröl verändert wird, um die Temperatur im Extruder konstant zu halten. Hier kann also der Öldurchfluss überhaupt konstant bleiben (kann aber natürlich auch in gewissen Bereichen verändert werden), sodass die Problematik der minimalen Durchströmung hier gar nicht auftritt.

Beim ersten erfindungsgemäßen Verfahren, bei dem also die Ölmenge zur Temperaturregelung verändert wird, ist es zweckmäßig, wenn die Temperatur des umlaufenden Wärmeträgeröles durch eine Kühlmittelmengenregelung etwa konstant gehalten wird. Eine konstante Temperatur des Wärmeträgeröles erleichtert die Temperaturregelung des Extruders.

Beim zweiten erfindungsgemäßen Verfahren ist es zweckmäßig, wenn man die Kühlmediummenge für das Wärmeträgeröl in Abhängigkeit von der Temperatur des Wärmeträgeröles regelt. Je nach Betriebszustand können unterschiedliche Öltemperaturen erforderlich sein, und nach diesen Erfordernissen wird die Kühlmediummenge geregelt.

Das Wärmeträgeröl, das während der Heizphasen durch die Kühlrohre gepumpt wird, kann zur besseren Wärmeübertragung und Temperaturverteilung dadurch beitragen, dass seine Temperatur über die Kühltemperatur angehoben wird.

Eine einfache Möglichkeit zur Veränderung der Ölmenge besteht darin, dass man die Drehzahl des Antriebs der Pumpe verändert. Alternativ dazu kann man die Ölmenge auch mittels eines Proportionalventils verändern.

Die Vorrichtung zur Durchführung des Verfahrens ist dadurch gekennzeichnet, dass die Regelung inner- auch während der reinen Heizphasen - eine minimale Strömung des Wärmeträgerols sicherstellt.

Vorzugsweise weist der Querschnitt des Extruderzylinders in mindestens einer Heizzone eine elliptische oder ovale Form auf. Auf diese Weise ist der Abstand der Kühlwendeln und der Heizelemente von dem zu kühlenden Material rundherum etwa gleich weit entfernt, was die Temperaturregelung verbessert. Dies ist aus der DE 27 56 752 A an sich bekannt

Anhand der beiliegenden Figuren wird die Erfindung näher erläutert. Es zeigt: Fig. 1 ein Schema einer erfindungsgemäßen Ausführung; Fig. 2 einen Zylinder mit kreisförmigem Querschnitt; Fig. 3 zeigt einen Zylinder mit elliptischem Querschnitt; und Fig. 4 ein Schema einer anderen erfindungsgemäßen Ausführungsform.

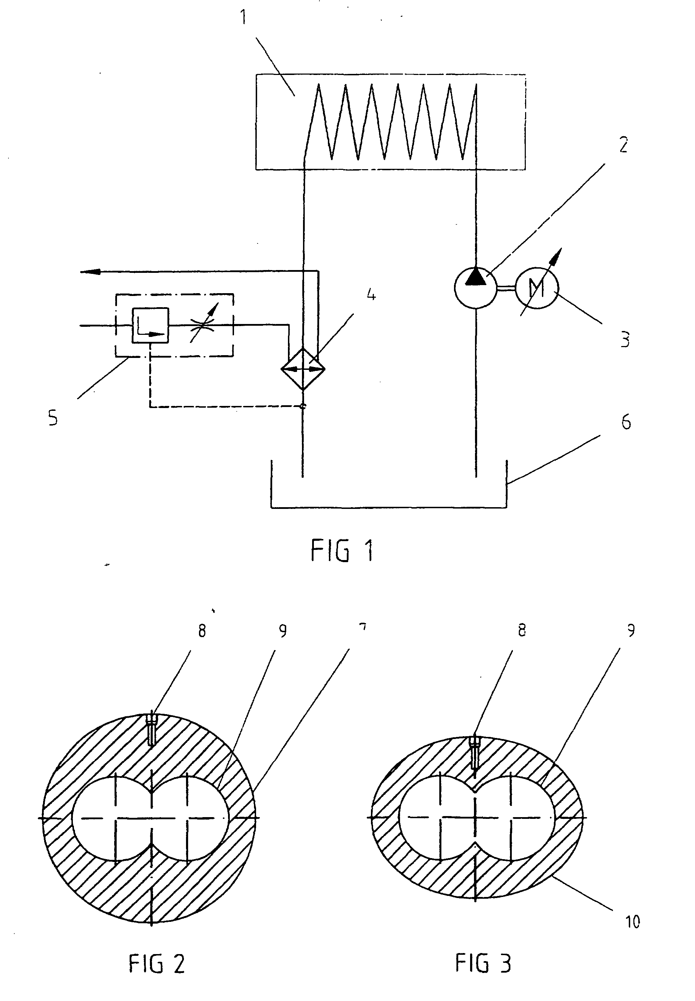

Vom Extruder ist in Fig. 1 nur eine Kühlwendel 1 angedeutet. Es ist ein Behälter 6 für ein Wärmeträgeröl vorgesehen, das von einer Pumpe 2 angesaugt und durch die Kühlwendel 1 gepumpt wird. Nach der Kühlwendel 1 gelangt das rücklaufende Wärmeträgeröl zu einem Wärmetauscher 4, wo es mit Wasser gekühlt wird. Die Pumpe 2 wird von einem regelbaren Motor 3 angetrieben, wobei der Motor 3 bei maximalem Kühlbedarf mit seiner maximalen Drehzahl läuft. Ohne Kühlbedarf oder während der Heizphasen läuft der Motor 3 mit einer minimalen Drehzahl, sodass stets ein minimaler Durchfluss erhalten bleibt. Der Kühlwasserbedarf wird mittels eines regelbaren Ventils 5 so geregelt, dass für die Kühlung, unabhängig von der Öldurchflussmenge, die Temperatur des Wärmeträgeröles konstant bleibt. Während der Heizphasen kann das Wärmeträgeröl auf eine höhere Temperatur gebracht werden als für die Kühlung erforderlich. Neben dem Vorteil, dass das Wärmeträgeröl in der Kühlwendel ständig im Fluss ist und eine thermische Überlastung verhindert wird, ergibt sich der weitere Vorteil, dass der Ölumlauf für eine gleichmäßigere Temperaturverteilung im Zylinder sorgt. Die Flussrichtung im Zylinder kann je nach Erfordernis im Gleichstrom oder Gegenstrom mit dem zu extrudierenden Material erfolgen. Der Kühlkreislauf kann auch mehrkreisig ausgeführt sein, wobei die einzelnen Kreise von einer oder mehreren Pumpen erzeugt werden können und je nach Erfordernis im Gleich-, Gegen- oder Kreuzstrom ausgeführt sein können. Der Wärmetauscher 4 kann wahlweise auch im Vorlauf statt im Rücklauf angeordnet werden.

Es wird nun auf die Fig. 2 und 3 Bezug genommen. Die Außenfläche 7 des Zylinders gemäß Fig. 2 ist kreisförmig, wogegen die Außenfläche 10 des Zylinders gemäß Fig. 3 elliptisch ist. Innerhalb des Zylinders ist eine Brillenbohrung 9 angebracht, in der sich die Schnecken des Doppelschneckenextruders sowie das zu extrudierende Material befinden. Zur Messung der Temperatur ist eine Bohrung mit einem Thermoelement 8 vorgesehen. Die Zufuhr bzw. Abfuhr von Wärme erfolgt über die Außenfläche 7 bzw. 10. Die Wärme muss also von dem Material, das sich in der Brillenbohrung 9 befindet, zur Außenfläche 7 bzw. 10 gelangen (oder umgekehrt).

Bei Vergleich der Figuren 2 und 3 kann leicht erkannt werden, dass die etwa elliptische Querschnittsform die Wege für die Wärmeleitung wesentlich verringert. Gleichzeitig verringern sich auch die Massen und damit die Wärmeinhalte des Zylinders. Dadurch wird nicht nur die Aufheizzeit günstig beeinflusst, sondern auch schneller eine gleichmäßige Temperaturverteilung erreicht.

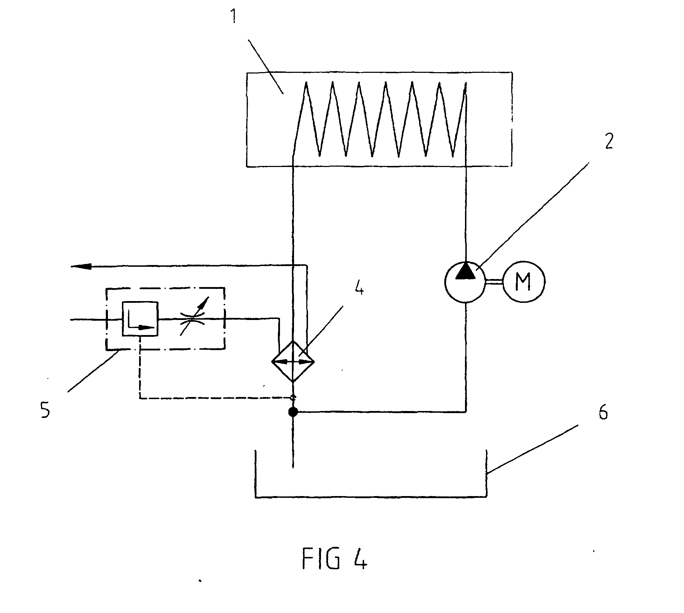

Die in FIG. 4 dargestellte Variante der Erfindung sieht vor, dass zur Kühlung nicht die Menge des Wärmeträgeröles geregelt wird, sondern die Menge des Kühlmediums für das Wärmeträgeröl. In diesem Falle bleibt auch während der Heizphasen der volle Strom des Wärmeträgeröles erhalten, wird aber nicht gekühlt. Der Behälter 6 wird nicht durchflossen und dient lediglich als Ausgleichsbehälter für die Volumenänderung durch die Erwärmung und zur Aufnahme des im System befindlichen Öles bei Entleerungen. Da die Umlaufmenge relativ gering ist, gibt es auch nur geringe Wärmeverluste. Die Temperaturverteilung im Extruderzylinder ist sowohl bei der Beheizung als auch der Kühlung optimal.

## Patentansprüche

1. Verfahren zum Beheizen und Kühlen von Extruderzylindern, insbesondere Zylindern von Doppelschneckenextrudern, wobei der Zylinder in mehrere Heizzonen bzw. Heiz-/Kühlzonen unterteilt ist, die Kühlung durch ein Wärmeträgeröl erfolgt, das durch mindestens eine Kühlwendel (1) gepumpt wird und während der Kühlung des Zylinders durch ein Kühlmedium gekühlt wird, und die Beheizung mittels außerhalb der Kühlwendel angeordneter elektrischer Widerstandsheizelemente erfolgt, wobei auch während der reinen Heizphasen ein geringer Öldurchfluss zur Vergleichmäßigung der Temperierung erhalten bleibt, **dadurch gekennzeichnet, dass** die Ölmenge in Abhängigkeit vom Kühlbedarf, der von einem stetig arbeitenden Temperaturregler (8) ermittelt wird, kontinuierlich von einer minimalen Durchströmung bis zur maximalen Durchströmung geregelt wird.

2. Verfahren zum Beheizen und Kühlen von Extruderzylindern, insbesondere Zylindern von Doppelschneckenextrudern, wobei der Zylinder in mehrere Heizzonen bzw. Heiz-/Kühlzonen unterteilt ist, die Kühlung durch ein Wärmeträgeröl erfolgt, das durch mindestens eine Kühlwendel (1) gepumpt wird und während der Kühlung des Zylinders durch ein Kühlmedium gekühlt wird, und die Beheizung mittels außerhalb der Kühlwendel angeordneter elektrischer Widerstandsheizelemente erfolgt, wobei auch während der reinen Heizphasen ein Öldurchfluss zur Vergleichmäßigung der Temperierung erhalten bleibt, **dadurch gekennzeichnet, dass** die Menge des Kühlmediums für das Wärmeträgeröl in Abhängigkeit von einem stetig arbeitenden Temperaturregler (8) kontinuierlich geregelt wird.

3. Verfahren nach Anspruch 1, **dadurch gekennzeichnet, dass** die Temperatur des umlaufenden Wärmeträgeröles durch eine Kühlmittelmengenregelung etwa konstant gehalten wird.

4. Verfahren nach Anspruch 2, **dadurch gekennzeichnet, dass** die Kühlmediummenge für das Wärmeträgeröl in Abhängigkeit von der Temperatur des Wärmeträgeröles geregelt wird.

5. Verfahren nach Anspruch 1, 2 oder 4, **dadurch gekennzeichnet, dass** die Temperatur des Wärmeträgeröles für den Minimaldurchfluss während der reinen Heizphasen über die Kühltemperatur angehoben wird.

6. Verfahren nach einem der Ansprüche 1 bis 5, **dadurch gekennzeichnet, dass** die Ölmenge durch Ändern der Drehzahl des Antriebs (3) der Pumpe (2) verändert wird.

7. Verfahren nach einem der Ansprüche 1 bis 5, **dadurch gekennzeichnet, dass** die Ölmenge mittels eines Proportionalventils verändert wird.

8. Vorrichtung zur Durchführung des Verfahrens nach einem der Ansprüche 1 bis 7, mit einem Extruderzylinder, insbesondere einem Zylinder eines Doppelschneckenextruders, wobei der Zylinder in mehrere Heizzonen bzw. Heiz-/Kühlzonen unterteilt ist, wobei in mindestens einer Heiz-/Kühlzone im Zylinder oder in einem auf dem Zylinder angebrachten Kühlelement mindestens eine Kühlwendel (1) für ein Wärmeträgeröl eingebracht ist, wobei weiters eine Pumpe (2) zum Pumpen des Wärmeträgeröls durch die mindestens eine Kühlwendel (1) vorgesehen ist und wobei zur Beheizung elektrische Widerstandsheizelemente über die mindestens eine Kühlwendel (1) gespannt sind und wobei schließlich ein drehzahlveränderlicher Antrieb (3) der Pumpe (2) oder ein Proportionalventil zum Ändern der Wärmeträgerölmenge durch die mindestens eine Heiz-/Kühlzone vorgesehen ist, der bzw. das von einer Regelung angesteuert wird, **dadurch gekennzeichnet, dass** die Regelung immer - auch während der reinen Heizphasen - eine minimale Strömung des Wärmeträgeröls sicherstellt.

9. Vorrichtung nach Anspruch 8, **dadurch gekennzeichnet, dass** der Querschnitt des Extruderzylinders in mindestens einer Heizzone eine elliptische oder ovale Form aufweist (fig. 3).

## Claims

1. Method for heating and cooling extrusion cylinders, in particular cylinders of double screw extruders, wherein the cylinder is divided into several heating zones or heating/cooling zones, cooling is done by a thermal oil, which is pumped through at least one cooling filament (1) and during cooling of the cylinder is cooled by a cooling medium, and heating is done by electrical resistance heating elements arranged outside the cooling filament, wherein a slight oil through-flow is also retained during the purely heating phases to even out the temperature equalisation, **characterised in that** the quantity of oil is continuously regulated as a function of the cooling requirement determined by a constantly operating temperature regulator (8) from a minimum through-flow up to the maximum through-flow.

2. Method for heating and cooling extrusion cylinders, in particular cylinders of double screw extruders, wherein the cylinder is divided into several heating zones or heating/cooling zones, cooling is done by a thermal oil, which is pumped through at least one cooling filament (1) and during cooling of the cylinder is cooled by a cooling medium, and heating is done by means of electrical resistance heating elements arranged outside the cooling filament, wherein an oil through-flow is also retained during the purely heating phases for evening out the temperature equalisation, **characterised in that** the quantity of cooling medium for the thermal oil is continuously regulated as a function of a constantly operating temperature regulator (8).

3. Method according to Claim 1, **characterised in that** the temperature of the circulating thermal oil is kept approximately constant by a quantity-regulating device for the cooling means.

4. Method according to Claim 2, **characterised in that** the quantity of cooling medium for the thermal oil is regulated as a function of the temperature of the thermal oil.

5. Method according to Claim 1, 2 or 4, **characterised in that** the temperature of the thermal oil for the minimum through-flow during the purely heating phases is raised above the cooling temperature.

6. Method according to one of Claims 1 to 5, **characterised in that** the quantity of oil is altered by changing the number of rotations of the drive (3) of the pump (2).

7. Method according to one of Claims 1 to 5, **characterised in that** the quantity of oil is altered by means of a proportional valve.

8. Device for carrying out the method according to one of Claims 1 to 7, with an extrusion cylinder, in particular a cylinder of a double screw extruder, wherein the cylinder is divided into several heating zones or heating/cooling zones, wherein at least one cooling filament (1) for a thermal oil is built into at least one heating/cooling zone in the cylinder or into a cooling element mounted on the cylinder, wherein a pump (2) is further provided for pumping the thermal oil through the at least one cooling filament (1) and wherein electrical resistance heating elements are clamped over the at least one cooling filament (1) for heating and wherein finally a drive (3) of the pump (2) with varying number of rotations or a proportional valve for changing the quantity of thermal oil through the at least one heating/cooling zone is provided, triggered by a regulating device, **characterised in that** the regulating device always ensures a minimum flow of thermal oil, even during the purely heating phases.

9. Device according to Claim 8, **characterised in that** the cross-section of the extrusion cylinder in at least one heating zone has an elliptical or oval shape (Fig. 3).

## Revendications

1. Procédé de chauffage et de refroidissement de cylindres d'extrudeuse, en particulier de cylindres d'extrudeuse à vis double, le cylindre étant subdivisé en plusieurs zones de chauffage ou zones de chauffage/refroidissement, le refroidissement s'effectuant au moyen d'une huile caloporteuse, refoulée à travers au moins un serpentin de refroidissement, et refroidie, pendant le refroidissement du cylindre, par un fluide de refroidissement, et le chauffage s'effectuant à l'aide d'éléments chauffants à résistance électrique, disposés à l'extérieur du serpentin de refroidissement, procédé dans lequel, également pendant les phases de chauffage pur, un faible débit d'huile est maintenu dans le but d'homogénéiser la régulation de température, **caractérisé en ce que** le débit d'huile est réglé de façon continue, par un régulateur de température travaillant de façon permanente, d'un débit d'écoulement minimal jusqu'à un débit d'écoulement maximal.

2. Procédé de chauffage et de refroidissement de cylindres d'extrudeuse, en particulier de cylindres d'extrudeuse à vis double, le cylindre étant subdivisé en plusieurs zones de chauffage ou zones de chauffage/refroidissement, le refroidissement s'effectuant au moyen d'une huile caloporteuse, refoulée à travers au moins un serpentin de refroidissement, et refroidie, pendant le refroidissement du cylindre, par un fluide de refroidissement, et le chauffage s'effectuant à l'aide d'éléments chauffants à résistance électrique, disposés à l'extérieur du serpentin de refroidissement, procédé dans lequel, également pendant les phases de chauffage pur, un débit d'huile est maintenu pour homogénéiser la régulation de température, **caractérisé en ce que** le débit de fluide de refroidissement utilisé pour l'huile caloporteuse est réglée de façon continue, par un régulateur de température travaillant de façon permanente.

3. Procédé selon la revendication 1, **caractérisé en ce que** la température de l'huile caloporteuse en circulation est maintenue à peu près constante par une régulation du débit du fluide de refroidissement.

4. Procédé selon la revendication 2, **caractérisé en ce que** le débit de fluide de refroidissement pour l'huile caloporteuse est réglé en fonction de la température de l'huile caloporteuse.

5. Procédé selon l'une des revendications 1 à 4, **caractérisé en ce que**, pendant les phases de chauffage pur, la température de l'huile caloporteur, pour le débit minimal, est augmentée au-dessus de la température de refroidissement.

6. Procédé selon l'une des revendications 1 à 5, **caractérisé en ce** le débit d'huile est modulé par modification de la vitesse de rotation de l'entraînement de la pompe.

7. Procédé selon l'une des revendications 1 à 5, **caractérisé en ce que** le débit d'huile est modulé à l'aide d'une valve proportionnelle.

8. Dispositif de mise en oeuvre du procédé selon l'une des revendications 1 à 7, avec un cylindre d'extrudeuse, en particulier un cylindre d'une extrudeuse à vis double, le cylindre étant subdivisé en plusieurs zones de chauffage ou zones de chauffage/refroidissement, au moins un serpentin de refroidissement (1) pour une huile caloporteuse étant monté dans le cylindre ou dans un élément de refroidissement monté sur le cylindre, dispositif dans lequel en outre une pompe (2) est prévue, pour refouler l'huile caloporteuse à travers le au moins un serpentin de refroidissement (1), et dans lequel, pour effectuer le chauffage, des éléments chauffants à résistance électrique sont placés sur le au moins un serpentin de refroidissement (1), **caractérisé par** un entraînement (moteur 3) à vitesse de rotation variable, de la pompe (2), ou bien par une valve proportionnelle, pour moduler le débit d'huile à travers la au moins une zone de refroidissement.

9. Dispositif selon la revendication 8, **caractérisé en ce que** la section transversale du cylindre d'extrudeuse, présente dans au moins une zone de chauffage, une forme sensiblement elliptique ou sensiblement ovale (Figure 3).
